# EUROPEAN PATENT SPECIFICATION

(11) **EP 4 574 779 B1**
(45) Date of publication and mention of the grant of the patent: **04.02.2026**
(21) Application number: 23219621.2
(22) Date of filing: 22.12.2023
(51) Int. Cl.: C03B 17/04

(54) **APPARATUS FOR PRODUCING A GLASS TUBE AND PROCESS FOR PRODUCING A GLASS TUBE VIA A DRAWING PROCESS**
VORRICHTUNG ZUR HERSTELLUNG EINES GLASROHRS UND VERFAHREN ZUR HERSTELLUNG EINES GLASROHRS DURCH EIN ZIEHVERFAHREN
APPAREIL DE PRODUCTION D'UN TUBE EN VERRE ET PROCÉDÉ DE PRODUCTION D'UN TUBE EN VERRE PAR L'INTERMÉDIAIRE D'UN PROCESSUS D'ÉTIRAGE

(43) Date of publication of application: 25.06.2025
(73) Proprietor: SCHOTT AG, 55122 Mainz (DE)
(72) Inventor: TRINKS, Volker, 95666 Mitterteich (DE); GMEINER, Reinhard, 95666 Leonberg (DE); OTT, Franz, 95692 Konnersreuth (DE); SOLLFRANK, Michael, 95666 Mitterteich (DE); DICK, Erhard, 94518 Spiegelau (DE)
(74) Representative: Schott Corporate IP

(56) References cited:
- CN-A- 110 255 864
- DE-A1- 102008 009 811
- US-A1- 2006 141 181

## Description

This disclosure relates to an apparatus for producing a glass tube and a process for producing a glass tube via a drawing process. The apparatus comprises a drawing head and a drawing needle, wherein the geometry and dimensions of the drawing head are designed in such a way that no streaks impairing the quality of the glass tubes are formed in a process according to this disclosure.

### Background

The Vello process is known for the production of glass tubes. It is a vertical drawing process in which the viscous glass melt is drawn off downward through a ring die. The glass melt is fed from a melting tank via a feeder channel or duct. At the end of the feeder channel, there is a cylindrical opening at the bottom with a nozzle through which the melt can flow out via a vertical cone, also called a drawing needle, which is adjustable in height and laterally and widens downward in the shape of a funnel. The drawing needle may also take a shape of a double conus at its downward end, wherein the first upper conus widens along the downward direction and the second lower conus tapers along the further downward direction. The cone is hollow and is connected to blowing air via an extension tube. As a result, the glass mass flowing around the valve body is kept open and can be drawn off as a glass tube downwards into a temperature-controlled shaft before it is deflected in freely suspended fashion or with the aid of a guide into a horizontal direction and drawn off by a drawing machine.

The down-draw process, which is also commonly used, is similar, with the difference that the formed glass tube is not deflected horizontally but is drawn off directly vertically downwards.

The end section of the feeder channel with the opening through which the glass melt is drawn off as a glass tube is often called the feeder head or drawing head. The above-mentioned vertical cone, i.e., the drawing needle, can be used to close the glass outlet of a drawing head which is intended for drawing glass tubes. The drawing needle is held and moved by a cylindrical extension, i.e., the needle shaft. The needle shaft protrudes from the drawing head at the upper open end. Before the glass melt leaves the drawing head via the glass outlet, it flows around the shank of the drawing needle, forming a so-called looping streak in the glass melt. A streak which may form in the glass is a chemical inhomogeneity that has a slightly different refractive index which differs from the base glass. A strongly pronounced streak can be seen with the naked eye, especially if the streak is located on the glass surface. It is also possible to make streaks visible in micrographs taken from cut cross sections of the glass tube.

DE 10 2008 009 811 A1 discloses a method for controlling and monitoring the temperature in the manufacture of glass tubes using the Vello or down-draw process. In this method a glass melt is introduced into a glass tube needle cell and metered through a nozzle ring onto a metering-drawing needle, wherein the metering-drawing needle is heated with its conical glass tube forming body. The wall of the metering-drawing needle with the connected glass tubular forming body consists of an electrically conductive material, wherein the heating is effected by current flow in the electrically conductive wall material. DE 10 2008 009 811 A1 also discloses a related device for controlling and monitoring the temperature in the manufacture of glass tubes using the Vello or down-draw process. Both the method and the device allow preventing devitrification which would manifest itself in the form of streaks on the glass tubes.

US 2017/0320766 A1 discloses bell assembly apparatuses with enhanced thermal dimensional stability that provide reduced siding loss during the production of glass tubing, and glass tubing forming apparatuses which incorporate bell assembly apparatuses with enhanced thermal dimensional stability such that undesired movement of bells within delivery orifices of glass delivery tanks due to thermal variation across the bell assembly apparatuses during glass tubing production is reduced.

US 2017/0341966 A1 discloses heating apparatuses and methods for glass tubing manufacturing. The heating apparatus includes a bowl configured to receive molten glass and a plurality of heating elements thermally coupled to the bowl, wherein the bowl includes a tub portion configured to hold the molten glass, a bowl well extending beneath the tub portion, and an orifice at a distal end of the bowl well. The plurality of heating elements include a first heating element disposed at a first vertical location along the bowl height, a second heating element disposed at a second vertical location along the bowl height, wherein the first vertical location is vertically spaced apart from the second vertical location. The heating apparatus is used to heat the molten glass as the molten glass flows from the tub portion through the bowl well and out of the orifice. The heating apparatus is configured to maintain thermal homogeneity of the molten glass exiting the orifice which mitigates variation in tube dimensions and instability in the glass tube manufacturing process.

CN110255864 A discloses a glass tube drawing head including an outer form and a drawing needle in between which molten glass is supplied and drawn out at the bottom as a tube. Also US2006141181 A1 teaches similar features as CN110255864 A.

A streak propensity of the glass undergoes a particular orientation as a result of the glass melt flowing around the needle shaft and is therefore visible as a looping streak. In the prior art it has been assumed that the looping streak is formed within the drawing head due to rejoining glass melt portions after passing the needle shaft in a stationary area and manifests itself as a streak in the manufactured glass tubes at a relatively stationary position with respect to their position relative to the forming components. If a glass tube is marked in such a way that its position can be traced as it flows out of the drawing head, the streak is found on a side of the glass tube surface which is opposite to the side of the glass inlet flow as it leaves the head. It was previously speculated that streaks forming on the surface of a drawn glass tube may be prevented by using a laterally positioned head overflow to draw off the affected portion of glass melt. This approach was however insufficient to sufficiently avoid the formation of streaks on the glass tube surface.

Drawing glass tubes with the known drawing heads, a so-called head overflow is used to suppress the formation of a looping streak in the glass melt and to thus prevent or at least mitigate the formation of streaks on the surface of the manufactured glass tubes. The glass melt drawn off via the head overflow is thereby no longer available for product manufacture, which reduces the overall yield and increases production costs.

The object of the present disclosure is to provide an apparatus and a method for increased prevention of the formation of visible streaks during the manufacture of glass tubing.

### Summary of the Invention

The described object is solved by the subject-matter of this disclosure.

In one aspect, this disclosure provides an apparatus for producing a glass tube comprising a drawing head and a drawing needle, wherein the drawing head comprises a glass inlet and a glass outlet, the drawing head having a total height h and an inner diameter d, wherein a ratio *h*/*d* is from 2/1 to 7/1, wherein a distance a between the drawing needle and an inner wall of the drawing head is from 40 to 300 mm.

In a related aspect, this disclosure provides a process for producing a glass tube via a drawing process, comprising the step of passing a glass melt through an apparatus according to this disclosure, wherein the process optionally comprises a subsequent hot forming step.

Surprisingly, it was found that adaptations in the geometrical design of the drawing head can influence the convectional flow within the glass melt, with the result that the looping streak is no longer visible as a streak on the product. This result was also found at a greatly reduced glass discharge at the head overflow or without operating the head overflow. In the drawing heads according to this disclosure, the flow of the glass melt in the drawing head is changed in such a way that the streak is displaced into the manufactured product, which is thus no longer present on the surface and is no longer visible on the product.

The drawing head according to the present disclosure can have a basic cylindrical geometry. The drawing head according to the present disclosure can have a total height *h* and an inner diameter *d,* wherein a ratio *h*/*d* can be from 2/1 to 7/1, preferably the ratio *h*/*d* can be from 3/1 to 4.5/1. Alternatively, the ratio *h*/*d* can be from 4/1 to 6/1.

In one embodiment of the drawing head, the inner diameter *d* can be more than 130 mm, or more than 150 mm, or more than 200 mm, or more than 250 mm, preferably the inner diameter *d* can be 300 mm.

In one embodiment of the drawing head, wherein the inner diameter *d* is equal to or larger than 200 mm, the ratio *h*/*d* can be from 3/1 to 4.5/1, or 3.2/1 to 4.3/1. In one embodiment of the drawing head, wherein the inner diameter *d* is less than 200 mm, the ratio *h*/*d* can be from 4/1 to 6/1, or 4.2/1 to 5.3/1.

In one embodiment of the drawing head, a distance a between the drawing needle and an inner wall of the drawing head can be in the range from 40 to 300 mm. Preferably the distance a can be in the range from 50 to 150 mm. In this disclosure, the distance a between the drawing needle and an inner wall can be understood as a position-dependent distance between any point on the surface of the needle shaft and the inner wall, which distance is measured within a horizontal plane and in a radial direction emanating from the horizontal axis of rotation of the needle shaft. The needle shaft may be oriented such that its axis of rotation is shifted with respect to the rotational axis of the drawing head which provides that the position-dependent distance a between the drawing needle and an inner wall may result in a sinusoidal functional behaviour along the outer circumference of the drawing needle. It may be advantageous to position the needle shaft such that its axis of rotation is shifted with respect to the rotational axis of the drawing head in order to account for and/or mitigate viscosity differences within the glass melt. In one embodiment, the needle shaft can be oriented such that its axis of rotation is congruent to the rotational axis of the drawing head.

In one embodiment of the drawing head, having a distance c between the glass outlet and a central axis of the glass inlet, a ratio *c*/*h* can be from 0.2/1 to 0.8/1. In one embodiment, the ratio *c*/*h* can be from 0.4/1 to 0.6/1. In one embodiment of the drawing head, in which the inner diameter *d* is equal or larger than 200 mm, the ratio *c*/*h* can be from 0.4/1 to 0.6/1. In one embodiment of the drawing head, in which the inner diameter *d* is less than 200 mm, the ratio *c*/*h* can be from 0.2/1 to 0.4/1.

In one embodiment, the drawing needle can have a shaft diameter s from 40 to 70 mm.

In one embodiment, the inner wall of the drawing head, which during use contacts a glass melt, can at least partially comprise a noble metal lining. In one embodiment, the noble metal lining can comprise platinum or a platinum alloy. In one embodiment, the inner wall of the drawing head, can be provided completely or at least partially with a noble metal lining at the surface areas which come into contact with the glass melt. Platinum sheets or sheets made of platinum alloys are suitable as a noble metal lining for this purpose. On the one hand this means prevents contact between the glass melt and the material of the inner wall of the drawing head, which is commonly made of refractory materials. On the other hand contamination of the glass melt is thereby avoided. Additionally, the lifespan of the drawing head comprising a noble metal lining is increased.

In one embodiment, the noble metal lining can comprise connections for electrical heating and may be directly heated using an electrical current flowing through the noble metal lining. In one embodiment, the noble metal lining may be divided into segments which may be heated and controlled separately, resulting in the following advantages:
1. The heating may be divided into individual zones and can thus be controlled zonally and very precisely.
2. The implementation of rapid temperature changes is possible.
3. Temperatures can be changed rapidly over a wide temperature range spanning several hundred degrees centigrade.
4. Replacement of the drawing head or drawing head tools is possible within a few hours.

In one embodiment, the drawing head can comprise, in addition to the glass inlet for receiving a glass melt, only one single further outlet opening in form of the glass outlet for discharging the glass melt. In other words, said embodiment can be devoid of any head overflow (5).

The drawing head according to this disclosure can be particularly preferable for processing aluminosilicate glasses and borosilicate glasses, which are melted at very high temperatures and thus require high effort and high costs. The drawing head according to this disclosure can achieve an increase in the directly usable glass melt quantity by approximately one fifth to one quarter which makes a process for producing a glass tube via a drawing process using the apparatus according to this disclosure very economical.

In one embodiment of the process, the drawing head can further comprise a head overflow, wherein an amount of glass melt drawn off via the head overflow is less than 10%, preferably less than 5%, of the amount of glass melt fed into the drawing head via the glass inlet. In an alternative embodiment of the process, an amount of glass melt discharged via the glass outlet for drawing glass tubes can be substantially equal to an amount of glass melt received via the glass inlet.

Advantageously, the process minimizes and/or avoids the loss of glass melt drawn off via the head overflow because the process and the apparatus allow production of glass tubes devoid of visible and palpable streaks even in the absence of the head overflow or in the absence of operating the head overflow.

In one embodiment of the process, a process temperature of the glass melt in the drawing head can be substantially set, preferably controlled, by electrical heating of the noble metal lining of the drawing head.

Further advantages and embodiments of this disclosure are explained with reference to the drawings.

### Brief Description of the Figures

Figure 1 shows a schematic representation of a drawing head.
Figures 2a and 2b show a drawing head, which is known in the prior art, in a lateral view and in plan view, respectively.
Figure 3 shows the formation and position of streaks in conventionally manufactured glass tubes.
Figure 4 shows a drawing head according to this disclosure.
Figure 5 shows the formation and position of streaks in glass tubes manufactured according to this disclosure.

### Detailed Description of the Figures

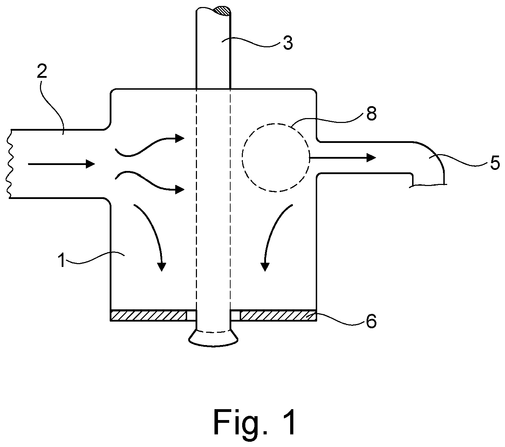

Figure 1 is a scheme, not drawn to scale, of a conventional drawing head (1) known in the art into which a glass melt enters via a glass inlet (2) in the direction indicated by the arrow. The glass melt flows around the centrally arranged drawing needle (3), which is conically flared at the lower end. A looping streak (8) is formed in the area indicated by the dashed lines. The glass exits the drawing head downward through an annular gap formed between the outlet ring (6) and the drawing needle (3). The drawing needle (3) has a channel inside through which gas is injected, thus ensuring that the downwardly withdrawn glass tube remains hollow and its emanating glass tube walls do not reunite. In order to prevent streaks forming on the surface of a drawn glass tube, the head overflow (5) is put into operation. This results in an approximate quantity of 15% to 25% of the supplied glass melt which is drawn off the drawing head. This glass melt is thus no longer directly available for glass tube production and may, in a best-case scenario, be remelted for subsequent use. In conventional Vello and down-draw processes, the quantity of glass melt drawn off via the head overflow is approximately 50 kg per hour.

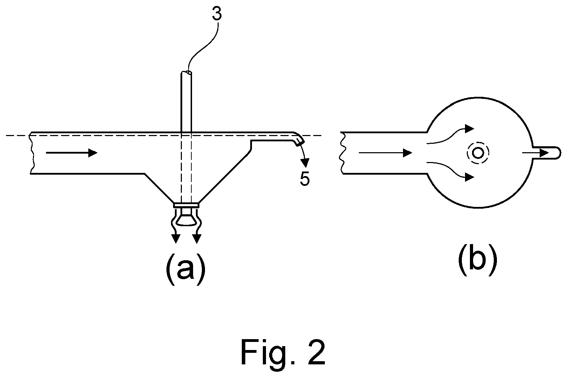

Figure 2A and Figure 2B, respectively, show a side view and a top view of a further drawing head known from the prior art, in which the glass inlet (in this representation entering from the left-hand side), opens into a substantially bowl-shaped volume. A glass tube is drawn downward via the drawing needle (3), while the glass melt drawn off via the head overflow (5) to suppress streak formation is discharged to the right-hand side (in this representation). The sketched drawing heads known from the prior art have a rather flat or bowl-shaped basic geometry and do not allow production of glass tubes which are devoid of streaks, unless the head overflow is put into operation.

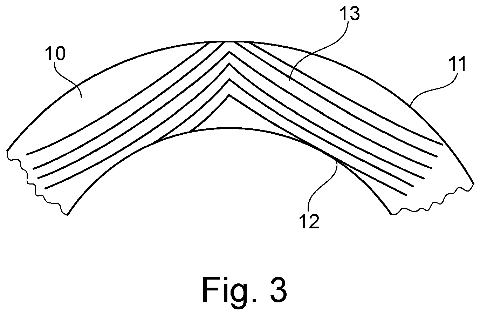

The formation and position of streaks (13) in the glass tube (10) which form in the absence of the operation of the head overflow using a conventional process is shown in Figure 3. The glass tube is surrounded by an outer surface (11) and an inner surface (12). The streaks extend from the inside of the glass tube to the outer surface (11), where they become visible to the naked eye as streaks on the glass tube surface. In some cases, the streaks (13) on the outer surface may also lead to palpable unevenness. Both the visible streaks and the palpable streaks impair the quality of the manufactured products and lead to increased scrap.

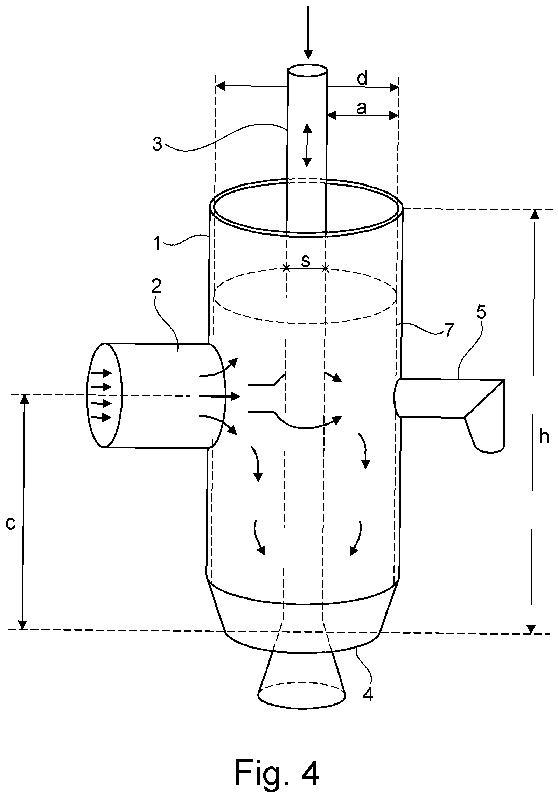

Figure 4 shows a drawing head (1) according to this disclosure, which allows production of glass tubes which are substantially or completely devoid of visually discernible nor palpable streaks, even in the absence of the operation of the head overflow (5). Depending on the type of glass processed and the production parameters, a head overflow (5) may be omitted completely. The glass melt enters the drawing head (1) via the glass inlet (2) and surrounds the shaft of the drawing needle (3). Due to the specially adapted geometry of the drawing head (1), the flow conditions during the drawing of the glass tubes are controlled in such a way that any looping streak in the glass melt exclusively results in streaks inside the drawn glass tubes, which streaks do not appear on the outer surface (11) or the inner surface (12) of the glass tubes and which are thus neither visually discernible nor palpable.

In Figure 4, the position of the surface of the glass melt in the drawing head is indicated with a dashed line.

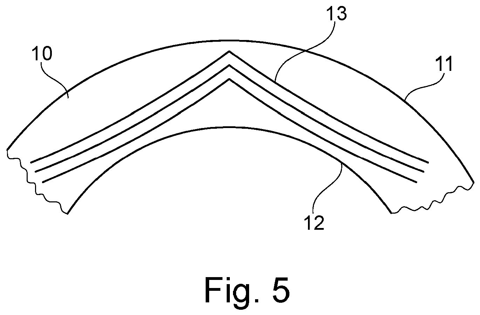

The formation of the streak pattern in a cross-section of a glass tube (10) manufactured according to the teaching of this disclosure is shown in Figure 5. The streaks are only found inside the tube and do not appear on the outer surface (11) or the inner surface (12) of the glass tubes.

### Reference numerals

- 1: drawing head
- 2: glass inlet
- 3: drawing needle
- 4: glass outlet
- 5: head overflow
- 6: outlet ring
- 7: inner wall
- 8: looping streak
- 10: glass tube
- 11: outer surface of the glass tube
- 12: inner surface of the glass tube
- 13: streak in the glass tube
- h: total height
- d: inner diameter
- s: shaft diameter
- c: distance between glass outlet and central axis of the glass inlet
- a: distance between shaft and inner wall

## Claims

1. Apparatus for producing a glass tube comprising a drawing head (1) and a drawing needle (3),
wherein the drawing head (1) comprises a glass inlet (2) and a glass outlet (4), the drawing head (1) having a total height h and an inner diameter d, wherein a ratio h/d is from 2/1 to 7/1, wherein a distance a between the drawing needle (3) and an inner wall (7) of the drawing head (1) is in the range from 40 to 300 mm.

2. Apparatus according to claim 1, **characterized in that** the distance a is in the range from 50 to 150 mm.

3. Apparatus according to claim 1 or 2, **characterized in that** the ratio h/d is from 3/1 to 4.5/1.

4. Apparatus according to any one of claims 1 to 3, having a distance c between the glass outlet (4) and a central axis of the glass inlet (2), **characterized in that** a ratio c/h is from 0.2/1 to 0.8/1.

5. Apparatus according to claim 4, **characterized in that** the ratio c/h is from 0.4/1 to 0.6/1 or alternatively from 0.2/1 to 0.4/1.

6. Apparatus according to any one of claims 1 to 5, **characterized in that** the inner diameter d is more than 130 mm, preferably the inner diameter d is 300 mm.

7. Apparatus according to any one of claims 1 to 6, **characterized in that** the inner wall (7) of the drawing head (1), which during use contacts a glass melt, at least partially comprises a noble metal lining.

8. Apparatus according to claim 7, **characterized in that** the noble metal lining comprises platinum or a platinum alloy.

9. Apparatus according to claim 7 or claim 8, **characterized in that** the noble metal lining comprises connections for electrical heating.

10. Apparatus according to any one of claims 1 to 9, **characterized in that** the drawing head (1) comprises in addition to the glass inlet (2) for receiving a glass melt only one single further outlet opening in form of the glass outlet (4) for discharging the glass melt.

11. Process for producing a glass tube via a drawing process, comprising the step of passing a glass melt through an apparatus according to any one of claims 1 to 10, wherein the process optionally comprises a subsequent hot forming step.

12. Process according to claim 11, wherein the drawing head (1) further comprises a head overflow (5), **characterized in that** an amount of glass melt drawn off via the head overflow (5) is less than 10%, preferably less than 5%, of the amount of glass melt fed into the drawing head (1) via the glass inlet (2).

13. Process according to claim 11, **characterized in that** an amount of glass melt discharged via the glass outlet (4) for drawing glass tubes is substantially equal to an amount of glass melt received via the glass inlet (2).

14. Process according to any one of claims 11 to 13, **characterized in that** a process temperature of the glass melt in the drawing head (1) is substantially set, preferably controlled, by electrical heating of the noble metal lining of the drawing head (1).

## Patentansprüche

1. Vorrichtung zur Herstellung eines Glasrohrs, umfassend einen Ziehkopf (1) und eine Ziehnadel (3), wobei der Ziehkopf (1) einen Glaseinlass (2) und einen Glasauslass (4) umfasst, wobei der Ziehkopf (1) eine Gesamthöhe h und einen Innendurchmesser d aufweist, wobei ein Verhältnis h/d von 2/1 bis 7/1 beträgt, wobei ein Abstand a zwischen der Ziehnadel (3) und einer Innenwand (7) des Ziehkopfes (1) in dem Bereich von 40 bis 300 mm liegt.

2. Vorrichtung nach Anspruch 1, **dadurch gekennzeichnet, dass** der Abstand a in dem Bereich von 50 bis 150 mm liegt.

3. Vorrichtung nach Anspruch 1 oder 2, **dadurch gekennzeichnet, dass** das Verhältnis h/d 3/1 bis 4,5/1 beträgt.

4. Vorrichtung nach einem der Ansprüche 1 bis 3 mit einem Abstand c zwischen dem Glasauslass (4) und einer Mittelachse des Glaseinlasses (2), **dadurch gekennzeichnet, dass** ein Verhältnis c/h von 0,2/1 bis 0,8/1 beträgt.

5. Vorrichtung nach Anspruch 4, **dadurch gekennzeichnet, dass** das Verhältnis c/h 0,4/1 bis 0,6/1 oder alternativ 0,2/1 bis 0,4/1 beträgt.

6. Vorrichtung nach einem der Ansprüche 1 bis 5, **dadurch gekennzeichnet, dass** der Innendurchmesser d mehr als 130 mm beträgt, vorzugsweise der Innendurchmesser d 300 mm beträgt.

7. Vorrichtung nach einem der Ansprüche 1 bis 6, **dadurch gekennzeichnet, dass** die Innenwand (7) des Ziehkopfs (1), die in Verwendung mit einer Glasschmelze in Kontakt steht, wenigstens zum Teil eine Edelmetallauskleidung umfasst.

8. Vorrichtung nach Anspruch 7, **dadurch gekennzeichnet, dass** die Edelmetallauskleidung Platin oder eine Platinlegierung umfasst.

9. Vorrichtung nach Anspruch 7 oder Anspruch 8, **dadurch gekennzeichnet, dass** die Edelmetallauskleidung Anschlüsse für elektrische Heizung umfasst.

10. Vorrichtung nach einem der Ansprüche 1 bis 9, **dadurch gekennzeichnet, dass** der Ziehkopf (1) zusätzlich zu dem Glaseinlass (2) zum Aufnehmen einer Glasschmelze nur eine einzige weitere Auslassöffnung in Form des Glasauslasses (4) zum Abführen der Glasschmelze aufweist.

11. Verfahren zur Herstellung eines Glasrohrs über ein Ziehverfahren, umfassend den Schritt des Führens einer Glasschmelze durch eine Vorrichtung nach einem der Ansprüche 1 bis 10, wobei das Verfahren gegebenenfalls einen nachfolgenden Warmformschritt umfasst.

12. Verfahren nach Anspruch 11, wobei der Ziehkopf (1) ferner einen Kopfüberlauf (5) umfasst, **dadurch gekennzeichnet, dass** eine über den Kopfüberlauf (5) abgezogene Menge an Glasschmelze kleiner als 10 %, vorzugsweise kleiner als 5 %, der über den Glaseinlass (2) dem Ziehkopf (1) zugeführten Menge an Glasschmelze ist.

13. Verfahren nach Anspruch 11, **dadurch gekennzeichnet, dass** eine über den Glasauslass (4) zum Ziehen von Glasrohren ausgegebene Menge an Glasschmelze im Wesentlichen gleich einer über den Glaseinlass (2) aufgenommenen Menge an Glasschmelze ist.

14. Verfahren nach einem der Ansprüche 11 bis 13, **dadurch gekennzeichnet, dass** eine Prozesstemperatur der Glasschmelze in dem Ziehkopf (1) im Wesentlichen durch elektrische Erwärmung der Edelmetallauskleidung des Ziehkopfes (1) eingestellt, vorzugsweise gesteuert, wird.

## Revendications

1. Appareil destiné à produire un tube en verre comprenant une tête d'étirage (1) et une aiguille d'étirage (3),
la tête d'étirage (1) comprenant une entrée pour le verre (2) et une sortie pour le verre (4), la tête d'étirage (1) ayant une hauteur totale h et un diamètre intérieur d, un rapport h/d étant de 2/1 à 7/1, une distance a entre l'aiguille d'étirage (3) et une paroi interne (7) de la tête d'étirage (1) étant comprise entre 40 et 300 mm.

2. Appareil selon la revendication 1, **caractérisé en ce que** la distance a est comprise entre 50 et 150 mm.

3. Appareil selon la revendication 1 ou 2, **caractérisé en ce que** le rapport h/d est de 3/1 à 4,5/1.

4. Appareil selon l'une quelconque des revendications 1 à 3, ayant une distance c entre la sortie pour le verre (4) et un axe central de l'entrée pour le verre (2), **caractérisé en ce qu'**un rapport c/h est de 0,2/1 à 0,8/1.

5. Appareil selon la revendication 4, **caractérisé en ce que** le rapport c/h est de 0,4/1 à 0,6/1, ou en variante de 0,2/1 à 0,4/1.

6. Appareil selon l'une quelconque des revendications 1 à 5, **caractérisé en ce que** le diamètre intérieur d est supérieur à 130 mm, de préférence le diamètre intérieur d est de 300 mm.

7. Appareil selon l'une quelconque des revendications 1 à 6, **caractérisé en ce que** la paroi interne (7) de la tête d'étirage (1), qui à l'usage est en contact avec une masse fondue de verre, comprend au moins partiellement un revêtement de métal noble.

8. Appareil selon la revendication 7, **caractérisé en ce que** le revêtement de métal noble comprend du platine ou un alliage de platine.

9. Appareil selon la revendication 7 ou la revendication 8, **caractérisé en ce que** le revêtement de métal noble comprend des branchements pour un chauffage électrique.

10. Appareil selon l'une quelconque des revendications 1 à 9, **caractérisé en ce que** la tête d'étirage (1) comprend, en plus de l'entrée pour le verre (2) destinée à recevoir une masse fondue de verre, une seule autre ouverture de sortie supplémentaire sous la forme de la sortie pour le verre (4) destinée à évacuer la masse fondue de verre.

11. Procédé destiné à produire un tube en verre par un procédé d'étirage, comprenant l'étape de passage d'une masse fondue de verre à travers un appareil selon l'une quelconque des revendications 1 à 10, le procédé comprenant éventuellement une étape ultérieure de formage à chaud.

12. Procédé selon la revendication 11, dans lequel la tête d'étirage (1) comprend en outre un trop-plein de tête (5), **caractérisé en ce qu'**une quantité de masse fondue de verre extraite par le trop-plein de tête (5) représente moins de 10 %, de préférence moins de 5 %, de la quantité de masse fondue de verre introduite dans la tête d'étirage (1) par l'entrée pour le verre (2).

13. Procédé selon la revendication 11, **caractérisé en ce qu'**une quantité de masse fondue de verre évacuée par la sortie pour le verre (4) pour l'étirage de tubes en verre est sensiblement égale à une quantité de masse fondue de verre reçue par l'entrée pour le verre (2).

14. Procédé selon l'une quelconque des revendications 11 à 13, **caractérisé en ce qu'**une température de procédé de la masse fondue de verre dans la tête d'étirage (1) est en grande partie réglée, de préférence régulée, par chauffage électrique du revêtement de métal noble de la tête d'étirage (1).
